(19) Europäisches Patentamt
European Patent Office
Office européen des brevets

(11) EP 0 878 506 B1

(12) **EUROPEAN PATENT SPECIFICATION**

(45) Date of publication and mention of the grant of the patent:
**30.07.2003 Bulletin 2003/31**

(21) Application number: **98108538.4**

(22) Date of filing: **11.05.1998**

(51) Int Cl.[7]: **C08L 69/00**
// (C08L69/00, 51:04, 53:02), (C08L69/00, 51:04, 53:02, 67:02), (C08L69/00, 51:04, 53:02, 71:12)

(54) **Polycarbonate composition**

Polycarbonatabmischung

Composition à base de polycarbonate

(84) Designated Contracting States:
**DE FR GB**

(30) Priority: **14.05.1997 JP 12385797**

(43) Date of publication of application:
**18.11.1998 Bulletin 1998/47**

(73) Proprietor: **Daicel Chemical Industries, Ltd.**
**Osaka 590-8501 (JP)**

(72) Inventors:
- **Katayama, Masahiro**
**Sakai-shi, Osaka 592-8344 (JP)**
- **Otsuka, Yoshihiro**
**Otake-shi, Hiroshima 739-0651 (JP)**

(74) Representative: **Grünecker, Kinkeldey, Stockmair & Schwanhäusser Anwaltssozietät**
**Maximilianstrasse 58**
**80538 München (DE)**

(56) References cited:
**EP-A- 0 240 038**
**EP-A- 0 594 021**
**EP-A- 0 658 603**
**EP-A- 0 761 763**
**EP-A- 0 767 215**
**EP-A- 0 816 433**
**EP-A- 0 825 206**
**WO-A-96/06135**
**DE-A- 4 211 890**

- **CHEMICAL ABSTRACTS, vol. 126, no. 20, 19 May 1997 (1997-05-19) Columbus, Ohio, US; abstract no. 264841, XP002112166 & JP 09 048894 A (DAICEL CHEM) 18 February 1997 (1997-02-18)**
- **CHEMICAL ABSTRACTS, vol. 124, no. 24, 10 June 1996 (1996-06-10) Columbus, Ohio, US; abstract no. 318874, XP002112167 & JP 08 059977 A (ASAHI CHEM. IND.) 5 March 1996 (1996-03-05)**
- **CHEMICAL ABSTRACTS, vol. 129, no. 6, 10 August 1998 (1998-08-10) Columbus, Ohio, US; abstract no. 68254, XP002112168 & XI, SHIPING ET AL.: HECHENG SHUZHI JI SULIAO, vol. 14, no. 2, 1997, pages 19-22,**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 878 506 B1

## Description

The present invention relates to a thermoplastic resin composition which is useful as a material for office automation (OA) equipment, communication equipment, housings for household electric appliances, chassis, other shaped articles, automotive parts and so forth. More particularly, the invention relates to a thermoplastic resin composition and a fire-retardant resin composition, which comprise a polycarbonate resin and a styrenic resin as main components and which are excellent in processability, impact resistance and thermal stability.

BACKGROUND OF THE INVENTION

Polycarbonate resins have good mechanical characteristics and good thermal properties and therefore are in wide industrial use. However, polycarbonate resins are poor in moldability or processability, in particular flow characteristics. Therefore, a number of polymer blends thereof with other thermoplastic resins have been developed. For the purpose of flowability improvement and cost reduction, polymer blends with acrylonitrile-butadiene-styrene copolymers (ABS resins) among thermoplastic resins are widely used in automotive, OA equipment, electronic and electric fields, among others. However, polymer blends of a polycarbonate resin and a rubber-modified styrenic resin are poor incompatibility, hence in mechanical characteristics, and therefore are of little present use.

In the fields of OA equipment and household electric appliances, among others, synthetic resin materials are required to have flame retardancy and halogen-containing flame retardants, namely bromine- or chlorine-containing ones, are generally used as fire or flame retardants to be added externally. Such flame retardants can provide relatively high fire retardancy but tend to generate corrosive or toxic gases upon processing or combustion. In view of increasing interest in environmental problems in recent years, it is desired that flame-retardant resins free of chlorine- or bromine-containing halogen compounds be developed as means of solving the drawbacks mentioned above. EP-A-767 215 discloses an aromatic polycarbonate-styrene polymer resin composition.

Accordingly, it is the object of the present invention to provide a thermoplastic resin composition which is comparable in flowability and impact resistance to polymer blends of a polycarbonate resin and an ABS resin in spite of its being a polymer blend comprising a polycarbonate resin and a rubber-modified (rubber-containing) styrenic resin as resin components, i.e. a composition having a good balance of mechanical properties and processability. This object has been solved with the composition of claim 1. Preferred embodiments are given in the dependent subclaims.

The present inventors pursued investigations intensively in order to achieve the above object and, as a result, found that (i), in the combination of a polycarbonate resin and a styrenic resin (inclusive of a rubber-modified or rubber-containing polystyrene resin), a specific morphology obtained by the addition of a compatibilizing agent can improve compatibility and give excellent flowability and impact resistance, that (ii) the fire retardancy and impact resistance can be markedly improved by the addition of a flame retardant such as an organophosphorus compound and a flame retardant auxiliary such as a fluororesin, and that (iii) the resulting composition is superior in flowability to the polymer blends of polycarbonate resin and ABS resin. They have thus solved the problem of long standing and have completed the present invention.

Thus, the thermoplastic resin composition of the present invention comprises a primary resin composition composed of a polycarbonate resin (1) and a styrenic resin (2), and a compatibilizing agent (3). The styrenic resin (2) includes rubber-modified polystyrene resins as well. The proportion of the compatibilizing agent (3) is preferably 0.1 to 20 parts by weight per 100 parts by weight of the primary resin composition composed of the polycarbonate resin (1) and styrenic resin (2). An essential feature of the present invention, which is reflected in such thermoplastic resin composition is that the domains or particles of the, styrenic resin, which is the dispersed phase, are surrounded or encapsulated by or with the compatibilizing agent (3).

When necessary, the resin composition may further contain a polyalkylene arylate resin (4) and/or a polyphenylene ether resin (5).

The composition of the present invention further comprises a flame retardant (6) (e.g. organophosphorus compound), optionally a flame retardant auxiliary (e.g. fluororesin) and as further essential component talc (8) in the amount as defined in claim 1.

Fig. 1 is a schematic reproduction of an electron photomicrograph, in section, of a thermoplastic resin composition constituted of polycarbonate, polystyrene and a compatibilizing agent.

Fig. 2 is a schematic reproduction of an electron photomicrograph, in section, of a thermoplastic resin composition constituted of polycarbonate and polystyrene.

[Polycarbonate resin (1)]

The polycarbonate resin or resin component (1) is obtained by reacting a divalent phenol with a carbonate precursor by the solution or melt or fusion technique.

Preferred examples of the divalent phenol are, for example, 2,2-bis(4-hydroxyphenyl)propane (bisphenol A), bis(4-hydroxyphenyl)methane, 1,1-bis(4-hydroxyphenyl)ethane, 1,1-bis(4-hydoxyphenyl)butane, 2,2-bis(4-hydroxy-3,5-dimethylphenyl)propane, 2,2-bis(4-hydroxy-3,5-dibromophenyl)propane, 2,2-bis(4-hydroxy-3-methylphenyl)propane, bis(4-hydroxyphenyl) sulfide, bis(4-hydroxyphenyl) ether and bis(4-hydroxyphenyl) sulfone. These divalent phenols may be used either singly or in combination. Bis(4-hydroxyphenyl) alkanes, in particular bisphenol A, are among particularly preferred divalent phenols.

As preferred carbonate precursors, there may be mentioned carbonyl halides (typically phosgene), carbonyl esters (typically diphenyl carbonate) and haloformates (typically dihaloformates of divalent phenols), among others. These may be used as a mixture. The carbonate resins obtained may be used either singly or in admixture.

In many instances, polycarbonate resins having a bisphenol skeleton (in particular bisphenol A-based polycarbonate resins) are used as the polycarbonate resins.

The viscosity average molecular weight of the polycarbonate resin is, for example, about $1 \times 10^4$ to $10 \times 10^4$.

[Styrenic resin (2)]

The resin component (2), namely the styrenic resin, may include polystyrenic resins (2a) and comprises rubber-modified or rubber-containing polystyrenic resins (2b). The styrenic resin (2) is composed of at least one optional polystyrenic resin (2a) and one of the rubber-modified polystyrenic resins (2b). It is mandating, in accordance with claim 1, that the resin (2) comprise at least one rubber-modified polystyrenic resin (2b).

As examples of the aromatic vinyl monomer for forming the polystyrenic resins (2a), there may be mentioned, for example, styrene, alkylstyrenes (e.g. vinyltoluenes such as o-methylstyrene, m-methylstyrene and p-methylstyrene, p-ethylstyrene, p-isopropylstyrene, butylstyrene, p-t-butylstyrene, 2,4-dimethylstyrene), and $\alpha$-alkylstyrenes (e.g. $\alpha$-methylstyrene, $\alpha$-ethylstyrene). These aromatic vinyl monomers may be used either alone or in combination. Styrene, vinyltoluenes and $\alpha$-methyl-styrene are preferred styrenic monomers. Styrene is more preferable.

The aromatic vinyl monomer(s) may be used in combination with a copolymerizable monomer or monomers (e.g. (meth)acrylic acid $C_{1-10}$ alkyl esters such as methyl (meth)acrylate, $\alpha,\beta$-ethylenically unsaturated carboxylic acids such as acrylic acid and methacrylic acid, unsaturated polybasic carboxylic acids or anhydrides thereof such as maleic acid and maleic anhydride, polymerizable imides such as maleimide, N-methylmaleimide and N-phenylmaleimide).

The rubber-modified polystyrene resin (2b) is a polymer comprising a matrix composed of an aromatic vinyl polymer (the above-mentioned polystyrenic resin (2a)) and a rubber or rubber-like polymer dispersed in the form of particles in the matrix. It may be either a block copolymer or a graft copolymer. Preferred as the rubber-modified polystyrenic resin is a graft copolymer that can usually be obtained by polymerizing a monomer mixture containing at least one aromatic vinyl monomer in the presence of a rubber or rubber-like polymer in a conventional manner (e.g. bulk polymerization, bulk suspension polymerization, solution polymerization, emulsion polymerization).

As the rubber-like polymer, there may be mentioned diene rubbers [polybutadiene (low cis-type or high cis-type polybutadiene), isoprene rubbers, styrene-butadiene copolymers, etc.], ethylene-vinyl acetate copolymers, acrylic rubbers, ethylenepropylene rubbers (EPDMs), etc. These rubber-like polymers may be used alone or two or more. Commercial products may be used as the rubber-like polymer.

Preferred rubber-like polymers are polymers of conjugated 1,3-dienes or derivatives thereof (e.g. 2-chloro-1,3-butadiene, 1-chloro-1,3-butadiene), in particular diene rubbers (polybutadiene (butadiene rubber), isoprene rubber, styrene-butadiene copolymer rubber, etc.).

The molecular weight of the polystyrenic resin (2a) or rubber-modified polystyrenic resin (2b) is not so critical and may for example be $1 \times 10^4$ to $100 \times 10^4$, preferably $5 \times 10^4$ to $50 \times 10^4$, in particular $10 \times 10^4$ to $50 \times 10^4$, in terms of weight average molecular weight.

The content of the rubber-like polymer (rubber component) in the rubber-modified polystyrenic resin is, for example 2 to 30% by weight, preferably 5 to 25% by weight, in particular 5 to 20% by weight.

The form of the rubber-like polymer dispersed in the matrix constituted of a polystyrenic resin is not critical but include the core/shell structure, onion structure, salami structure and the like. The rubber-like polymer constituting the dispersed phase may have a particle diameter selected depending on the application of the resin composition within the range of, for example, 0.1 to 10 $\mu$m, preferably 0.2 to 7 $\mu$m, in particular about 0.5 to 5 $\mu$m, in terms of volume average molecular diameter.

[Compatibilizing agent (3)]

The thermoplastic resin composition of the present invention is characterized in that the domains of the styrenic resin (dispersed phase) are surrounded or capsulated by or in the compatibilizing agent (3). Thus, the interface between the matrix constituted of the polycarbonate resin (1) and the domains constituted of the styrenic resin (2) is nearly wholly occupied by the compatibilizing agent (3). Namely, the compatibilizing agent (3) is interposed or laying

between the matrix of the polyearbonate resin (1) and the domains of the styrenic resin (2).

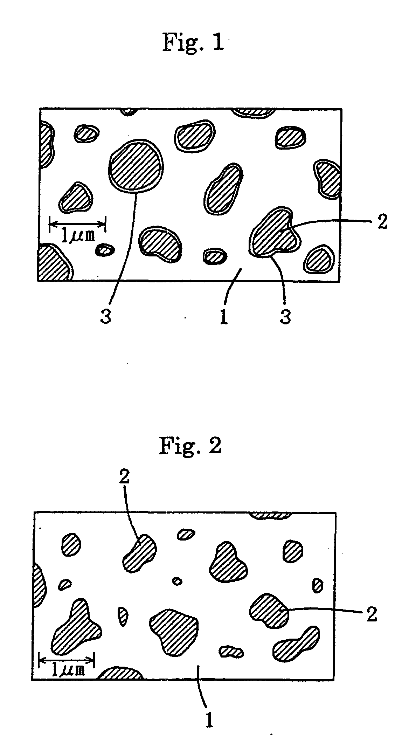

Fig. 1 is a schematic reproduction of an electron photomicrograph of a thermoplastic resin composition composed of a bisphenol A-based polycarbonate (1) and a polystyrene (2a) and a.compatibilizing agent (3) of an epoxy-modified block copolymer. Fig. 2 is a schematic reproduction of an electron photomicrograph of a resin composition obtained by excluding the compatibilizing agent (3) from the thermoplastic resin composition mentioned above. In the resin composition containing no compatibilizing agent, no compatibilizing agent exists, as shown in Fig. 2, in the interfaces between the matrix 1 constituted of the polycarbonate and the do'mains 2 constituted of the polystyrene. On the contrary, in the thermoplastic resin composition of the present invention, the compatibilizing agent 3 does exist in the interfaces between the matrix 1 constituted of the polycarbonate and the domains 2 constituted of 'the polystyrene and thus the domains 2 are respectively enclosed or encapsulated in the compatibilizing agent 3. The thickness of the compatibilizing agent 3 layer in the interfaces may be uniform or nonuniform all over or all around. The thickness of the compatibilizing agent 3 layer may depend on the amount used of the compatibilizing agent, hence cannot be specified, but, usually, it is, for example, about 0.5 to 500 nm (e.g. 1 to 100 nm), preferably about 3 to 50 nm. In the electron photomicrograph shown, it can be confirmed by osmic acid staining of the compatibilizing agent that the component occurring in the interface between the matrix and domains mention above is the compatibilizing agent 3.

The compatibilizing agent (3) according to the present invention comprises epoxy-modified or epoxy-introduced block-copolymers (E) derived from block copolymers (C) comprising a polymer block (A) mainly composed of an aromatic vinyl compound and a polymer block (B) mainly composed of a conjugated diene compound and/or a partial hydrogenation product (D) derived from the block copolymer (C) by epoxidization of the double bond originating from the conjugated diene compound.

As examples of the "aromatic vinyl compound", which is the main constituent of the polymer block (A) constituting the block copolymer (C), there may be mentioned the same monomers as the above-mentioned aromatic vinyl monomers, for example styrene alkylstyrenes (e.g. vinyltoluenes such as o-methylstyrene, m-methylstyrene and p-methylstyrene, p-t-butylstyrene, etc.), $\alpha$-alkylstyrenes (e.g. $\alpha$-methylstyrene etc.), divinylbenzene and 1,1-diphenylstyrene. These monomers may be used alone or in combination of two or more. Among these vinyl aromatic compounds, styrene is preferred.

As the "conjugated diene compound", which is the main constituent of the polymer block (B) constituting the block copolymer (C), there may be mentioned, for example, butadiene, isoprene, 1,3-pentadiene, 2,3-dimethyl-1,3-butadiene. piperylene, 3-butyl-1,3-octadiene and phenyl-1,3-butadiene. The conjugated diene compounds may also be used either alone or in combination of two or more. Preferred diene compounds include butadiene, isoprene and a combination of these.

The block copolymer (C) comprises the polymer block (A) comprising a aromatic vinyl compound and the polymer block (B) comprising a conjugated diene compound. The copolymerization ratio (by weight) between the aromatic vinyl compound and the conjugated diene compound can be selected within the range of, for example, aromatic vinyl compound/conjugated diene compound = 5/95 to 95/5 (weight ratio), preferably 15/85 to 90/10 (weight ratio), in particular 30/70 to 80/20 (weight ratio). Usually, it is about 50/50 to 80/20 (weight ratio).

The molecular structure of the block copolymer (C) may be linear, branched or radiate, or an arbitrary combination of these. As the block structure involving polymer block (A) and polymer block (B), there may be mentioned the following types: A-B, A-B-A, B-A-B, A-B-A-B, $(A-B-)_4Si$, A-B-A-B-A, B-A-B-A-B, etc.

In particular, the molecular structure of the block copolymer is preferably that of a block copolymer (C) terminally having a B block, for example the linear A-B or linear A-B-A-B structure. Thus, at least one end or terminal block of the block copolymer (C) comprises preferably a B block.

The unsaturated bonds in block copolymer (C) as originating from the conjugated diene compound may be partly hydrogenated to give a partially hydrogenated copolymer (D). As the block copolymer (C), at least one species selected from among the above-mentioned block structures can be used.

The weight average molecular weight, on the polystyrene basis, of the whole block copolymer (C) can be selected within the range of, for example, 20,000 to 600,000, preferably 50,000 to 550,000, and more preferably 70,000 to 500,000. When the weight average molecular weight is below 20,000, mechanical properties will be insufficient. When it exceeds 600,000, it will unfavorably become difficult to conduct the hydrogenation reaction. For obtaining an appropriate level of compatibility among the components, it is preferred that the block copolymer (C) has a molecular weight distribution [ratio (Mw/Mn) between weight average molecular weight (Mw) and number average molecular weight (Mn)] be not more than 10 (1 to 10), in particular 1.5 to 7.

The epoxy-modified block copolymer (E) can be obtained by reacting the above-mentioned block copolymer (C) and/or a partial hydrogenation product (D) derived therefrom with an epoxidizing agent (e.g. a hydroperoxide, or a peracid such as performic acid, peracetic acid or perbenzoic acid) in an inert solvent. The amount of the epoxidizing agent is not strictly limited but may be selected according to the epoxidizing agent species, the desired degree of epoxidization, and the block copolymer (C) and/or partial hydrogenation product (D). It is desirable to select the amount of the epoxidizing agent so that the finally obtained epoxy-modified block copolymer (E) have an epoxy equivalent of

140 to 2700, preferably 200 to 2000 (300 to 1500, for instance). When the epoxy equivalent is below 140, the elastic properties of the polymer can hardly be expressed. When it exceeds 2700, the characteristic physical properties resulting from epoxidization can hardly be expressed.

The epoxy equivalent is calculated as follows:

$$\text{Epoxy equivalent} = 1600/X$$

where X is the concentration of oxirane oxygen (% by weight) in an epoxy-modified block copolymer. It represents the weight of epoxy-modified block copolymer per mole of oxirane oxygen. The oxirane oxygen concentration can be determined by titration using a solution of hydrogen bromide in acetic acid..

[Polyalkylene arylate resin (4)]

The resin composition of the present invention may contain a polyalkylene arylate resin (4). The polyalkylene arylate resin (4) is the reaction product from an aromatic dicarboxylic acid component comprising an aromatic dicarboxylic acid or a reactive derivative thereof (e.g. a lower alkyl ester such as dimethyl ester or an anhydride) and a diol component selected from among aliphatic, alicyclic and aromatic diols and containing at least one of aliphatic and/or alicyclic diols, or a mixture of such reaction products. The polyalkylene arylate resin can be produced in the conventional manner, for example by the esterification or transesterification process.

The aromatic dicarboxylic acid component comprises at least one of terephthalic acid, naphthalenedicarboxylic acids (2,6-naphthalenedicarboxylic acid, etc.), or reactive derivatives thereof (e.g. $C_{1-4}$ alkyl esters, such as dimethyl terephthalate), A preferred aromatic dicarboxylic acid component can be constituted of at least terephthalic acid or a reactive derivative thereof.

The aromatic dicarboxylic acid component may contain at least one further dicarboxylic acid selected from among other dicarboxylic acids (e.g. aromatic dicarboxylic acids containing 8 to 14 carbon atoms, such as phthalic acid, isophthalic acid and 4,4'-diphenyldicarboxylic acid, alicyclic dicarboxylic acids containing 8 to 14 carbon atoms, such as cyclohexanedicarboxylic acid and cyclohexanediacetic acid, aliphatic dicarboxylic acids containing 4 to 12 carbon atoms, such as succinic acid, adipic acid, sebacic acid and azelaic acid).

The diol component comprises at least one diol selected, for example, from among aliphatic alkylenediols ($C_{2-12}$ aliphatic diols such as ethylene glycol, 1,3-propanediol, 1,4-butanediol, 2-ethyl-1,3-propanediol, neopentyl glycol, 1,5-pentanediol, 1,6-hexanediol, 3-ethyl-2,4-pentanediol, 2-methyl-2,4-pentanediol, 2,2,4-trimethyl-1,4- and -1,5-pentanediol, 2-ethyl-1,3-hexanediol, 2,2-diethyl-1,3-propanediol and 2,5-hexanediol, preferably straight-chain $C_{2-6}$ alkylene glycols, in particular straight-chain $C_{2-4}$ alkylene glycols, etc.) and alicyclic diols (cyclohexanediols such as 1,4-dihydroxycyclohexane, 1,4-cyclohexanedimethanol, 2,2-bis(4-hydroxycyclohexyl)propane, 2,4-dihydroxy-1,1,3,3-tetramethylcyclobutane, etc.).

The diol component may further be used in combination with an oxyalkylene glycol (diethylene glycol, triethylene glycol, dipropylene glycol, tripropylene glycol or the like), an aromatic diol (e.g. diols containing 6 to 21 carbon atoms such as 1,4-di(β -hydroxyethoxy)benzene, 2,2-bis(3-β-hydroxyethoxyphenoxy)propane, 2,2-bis(4-hydroxyethoxyphenyl)propane, 2,2-bis(4-hydroxypropoxyphenyl)propane, 2,2-bis(4-hydroxypropylphenyl)-propane, etc.) or the like. These diol components may be used either singly or in combination of two or more.

A preferred diol component contains at least one diol selected from the group consisting of ethylene glycol, 1,4-butanediol and 1,4-cyclohexanedimethanol.

The polyalkylene arylate resin may have a branched structure, if necessary, which results from the use of a relatively small amount of a polyhydric alcohol (glycerol, trimethylolethane, trimethylolpropane, pentaerythritol or the like) or a polybasic carboxylic acid (trimesic acid, trimellitic acid or the like), or a derivative thereof.

Preferred polyalkylene arylate resins are polyalkylene terephthalates (poly-$C_{2-4}$-alkylene terephthalates such as polyethylene terephthalate and polybutylene terephthalate), polyalkylene naphthalates (poly-$C_{2-4}$-alkylene naphthalates such as polyethylene naphthalate and polybutylene naphthalate), poly(1,4-cyclohexanedimethylene terephthalate), and copolymers of these (copolyesters).

The molecular weight of the polyalkylene arylate resin can be selected within the range of, for example, 10000 to 1000000, preferably 20000 to 500000, expressed in terms of weight average molecular weight.

[Polyphenylene ether resin (5)]

The resin component (5), namely polyphenylene ether resin, to be used according to the present invention includes homopolymers and copolymers having the repeating unit of the formula (I) and/or (II) shown below. These polyphenylene ether resins may be used singly or in combination of two or more.

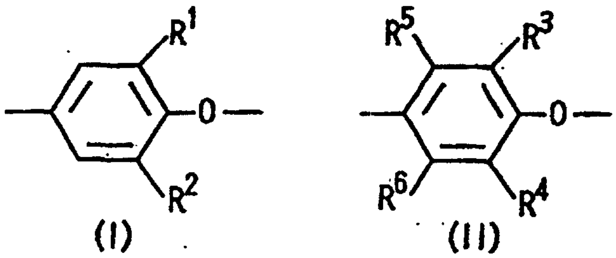

(I) (II)

wherein $R^1$, $R^2$, $R^3$, $R^4$, $R^5$ and $R^6$ each independently represents an alkyl group containing 1 to 4 carbon atoms (e.g. methyl, ethyl, propyl, butyl, t-butyl), an aryl group (e.g. phenyl) or a hydrogen atom, excluding the case where $R^5$ and $R^6$ are both hydrogen atoms.

As homopolymer polyphenylene ether resins, there may be mentioned, for example, poly(2,6-dimethyl-1,4-phenylene) ether, poly(2-methyl-6-ethyl-1,4-phenylene) ether, poly(2,6-diethyl-1,4-phenylene) ether, poly(2-methyl-6-n-propyl-1,4-phenylene) ether, poly(2-ethyl-6-n-propyl-1,4-phenylene)ether, poly(2,6-di-n-propyl-1,4-phenylene) ether, poly(2-methyl-6-n-butyl-1,4-phenylene) ether, poly(2-ethyl-6-isopropyl-1,4-phenylene) ether and poly (2-methyl-6-hydroxyethyl-1,4-phenylene) ether. Among these resins, poly(2,6-dimethyl-1,4-phenylene) ether is most preferred.

The polyphenylene ether copolymer is a copolymer having the phenylene ether structure as its main monomer unit and includes, for example, copolymers of a monomer for forming the homopolymer mentioned above (in particular 2,6-dimethylphenol) and another phenol or other phenols, such as copolymer of 2,6-dimethylphenol and 2,3,6-trimethylphenol, copolymer of 2,6-dimethylphenol and o-cresol, and copolymer of 2,6-dimethylphenol, 2,3,6-trimethylphenol and o-cresol.

[Flame retardant (6)]

The resin composition of the present invention contains a flame retardant (6). The flame retardant includes halogen-containing flame retardants, phosphorus-containing flame retardants, inorganic flame retardants and so forth. These flame retardants may be used singly or in combination of two or more. However, as defined in claim 1 the flame retardant (6) must comprise a phosphourus-containing flame retardant.

As the halogen-containing flame retardants, there may be mentioned, for example, bromine and/or chlorine atom-containing (in particular bromine atom-containing) organic compounds such as halogenated bisphenols (tetrabromobisphenol A, tetrabromobisphenol A-based epoxy resin oligomer, brominated bisphenol-based phenoxy resin, etc.), aromatic halogen compounds (decabromodiphenol oxide etc.), halogenated polycarbonates (brominated bisphenol-based polycarbonate etc.), halogenated aromatic vinyl polymers (brominated polystyrene, brominated crosslinked polystyrene, etc.), halogenated polyphenylene ethers (brominated polyphenylene oxide, polydibromophenylene oxide, decabromodiphenyl oxide-bisphenolcondensate, etc.), halogenated cyanurate resins and halogen-containing phosphate esters.

The phosphorus-containing flame retardants that are added to the resin composition of the present invention are not limited to particular species provided that they contain at least one phosphorus atom. They include organophosphorus compounds (phosphate esters, phosphite esters, phosphines, phosphine oxides, biphosphines, phosphonium salts, phosphinic acids and salts thereof, etc.), and inorganic phosphate salts, among others.

As the phosphate esters among the organophosphorus compounds, there may be mentioned, for example, orthophosphate esters and condensates thereof such as aliphatic phosphate esters (trimethyl phosphate, triethyl phosphate, tributyl phosphate, tri(2-ethylhexyl)phosphate, tributoxyethyl phosphate, trioleyl phosphate, dibutyl phosphate, monobutyl phosphate, di(2-ethylhexyl) phosphate, monoisodecyl phosphate, 2-acryloyloxyethyl acid phosphate, 2-methacryloyloxyethyl acid phosphate, dicyclopentyl hypodiphosphate, etc.), aromatic phosphate esters (triphenyl phosphate, tricresyl phosphate, trixylenyl phosphate, tris(isopropylphenyl) phosphate, tris(o-phenylphenyl) phosphate, tris(p-phenylphenyl) phosphate, trinaphthyl phosphate, cresyl diphenyl phosphate, xylenyl diphenyl phosphate, di(isopropylphenyl) phenyl phosphate, o-phenylphenyl dicresyl phosphate, dipyrocatechol hypodiphosphate, etc.), aliphatic-aromatic phosphate esters (diphenyl (2-ethylhexyl) phosphate, diphenyl 2-acryloyloxyethyl phosphate, diphenyl 2-methacryloyloxyethyl phosphate, phenyl neopentyl phosphate, pentaerythritol diphenyl diphosphate, ethyl pyrocatechol phosphate, etc.),

Among the organophosphorus compounds, the phosphite esters include phosphite esters and condensates thereof such as aromatic phosphites (triphenyl phosphite, trisnonylphenyl phosphite, phenyl pyrocatechol phosphite,

etc.), and aliphatic phosphites (tristridecyl phosphite, dibutyl hydrogen phosphite, methyl neopentyl phosphite, pentaerythritol diethyl diphosphite, dineopentyl hypophosphite, etc.).

The organophosphorus compounds include methyl neopentyl phosphonate, triphenylphosphine oxide,. tricresylphosphine oxide, diphenyl methanephosphonate, diethyl phenylphosphonate, etc.

These organophosphorus compounds may be used singly or in combination of two or more.

The inorganic phosphate salts mentioned above as flame retardants include, for example, ammonium polyphosphate.

Red phosphorus may be used as the phosphorus-containing flame retardant. Red phosphorus may be one surface-treated beforehand. The surface treatment of red phosphorus includes, among others, treatment for coating with a coat film of a metal hydroxide (e.g. magnesium hydroxide, zinc hydroxide, aluminum hydroxide, titanium hydroxide), treatment for coating with a coat film comprising such metal hydroxide and a thermosetting resin, and treatment for coating with a plurality of layers comprising a coat film of the metal hydroxide and a coat film of a thermosetting resin.

Preferred phosphorus-containing flame retardants are organophosphorus compounds having at least one ester-forming oxygen atom directly bound to a phosphorus atom (organic phosphates) and condensates thereof. Such organophosphorus compounds, when added to the thermoplastic resin composition, provide flame retardancy and improve the impact resistance. Among the phosphate esters, aromatic phosphate esters (triphenyl phosphate etc.) and condensates thereof are particularly preferred.

The total number of carbon atoms in the substituent or substituents on the aromatic ring or rings in the aromatic phosphate esters can appropriately be selected and it may be 10 to 20 (e.g. 12 to 18). As alkyl-substituted aromatic phosphate esters, there may be mentioned, for example, bis($C_{5-10}$-alkyl)phenyl phenyl phosphates (bisnonylphenyl phenyl phosphate etc.). Among the phosphate esters, hydroxyl-containing aromatic phosphate esters (e.g. phosphate esters derived from aromatic phosphate esters such as tricresyl phosphate and triphenyl phosphate by substitution of the aromatic ring with at least one phenolic hydroxyl group) are also preferred. As examples of such phosphate esters, there may be mentioned resorcinyl diphenyl phosphate, bisphenol A diphenyl phosphate and the like.

As examples of the inorganic flame retardants, there may be mentioned various metal compounds, for example metal hydroxides such as calcium hydroxide, barium hydroxide, zirconium hydroxide, magnesium hydroxide, aluminum hydroxide, dolomite, hydrotalcite, etc., metal oxides such as tin oxide, zirconium oxide, etc., metal carbonates such as magnesium carbonate, which may be basic, zinc carbonate, calcium carbonate, barium carbonate, etc., and metal borates such as zinc borate, zinc metaborate, barium metaborate, etc. These inorganic flame retardants may be used singly or in combination of two or more.

[Flame retardant auxiliary (7)]

For the purpose of attaining higher flame retardancy, the resin composition of the present invention may further contain a flame retardant auxiliary (7), for example at least one flame retardant auxiliary selected from among triazine compounds, novolak resins, metal compounds, silicone compounds (silicone resins or silicone oils), silica, aramid fiber, polyacrylonitrile fiber and fluororesins.

As the triazine compounds, there may for example be mentioned compounds haying the triazine skeleton which is effective in improving the flame retardancy, for example melamine and derivatives thereof (melam, melem, melone, melamine cyanurate, melamine phosphate, melamine resins, BT resins, etc.) and guanamine and derivatives thereof (succinoguanamine, adipoguanamine, methylglutaroguanamine, etc.). The novolak resins are obtained by subjecting a phenol and an aldehyde to condensation in the presence of an acid catalyst (e.g. sulfuric acid, hydrochloric acid, phosphoric acid) and are effective as drip inhibitors preventing the live glowing masses from dropping on the occasion of burning.

As the phenol which is the starting material for the novolak resins, there may be mentioned, for example, phenol, phenols (cresols such as o-, m- and p-cresol, etc.) having one or more substituents selected from among $C_{1-20}$ alkyl groups (methyl, ethyl, isopropyl, t-butyl, n-octyl, stearyl, etc.), aryl groups (phenyl etc.), alkoxy groups (methoxy, ethoxy, etc.), aryloxy groups (phenoxy etc.), pyrocatechol, resorcinol, hydroquinone, salicylaldehyde, salicylic acid, p-hydroxybenzoic acid, p- or o-cyanophenol,

As examples of the aldehyde, there may be mentioned formaldehyde, acetaldehyde, n-propanal, isopropanal, n-butanal, isobutyraldehyde, benzaldehyde.

Usable as the metal compounds are metal oxides (metal oxides such as aluminum oxide, iron oxide, titanium oxide, manganese oxide, magnesium oxide, zirconium oxide, zinc oxide, molybdenum oxide, cobalt oxide, bismuth oxide, tin oxide, antimony oxide, nickel oxide, copper oxide, tungsten oxide, etc., and composite metal oxides derived from these, etc.) and metal powders (metals corresponding to the metal oxides mentioned above and alloys of the metals).

The silicone compounds include silicone resins and silicone oils. The silicone resins can be obtained by hydrolyzing and polymerizing organohalosilanes. The silicone oils include polydiorganosiloxanes, typically polydimethylsiloxane, and polydiorganosiloxanes having various substituents (e.g. $C_{1-6}$ alkyl, $C_{5-12}$ aryl, (meth)acryloyl, vinyl groups) as well.

The silicone oils have a viscosity, at a temperature of 25°C, of, for example, 500 to 1,000,000 centipoises, preferably 90,000 to 150,000 centipoises.

Silica (e.g. amorphous silicon dioxide) may be surface-treated with a silane coupling agent (e.g. a silane coupling agent having at least one functional group selected from among hydrocarbon groups, vinyl group, epoxy group, amino group, etc.) or the like.

The aramid fiber can be prepared by dissolving isophthalamide or polyparaphenyleneterephthalamide in a solvent (amide solvent or sulfuric acid) and performing solution spinning. The mean fiber diameter is usually 1 to 500 µm, and the mean fiber length is generally 0.1 to 10 mm.

The mean fiber diameter of the polyacrylonitrile fiber can be selected within the range of 1 to 500 µm, and the mean fiber length within the range of 0.1 to 10 mm.

The fluororesins as the flame retardant auxiliaries are macromolecules having a number average molecular weight Mn of at least 10,000 and desirably have a glass transition temperature of not lower than -30°C (preferably 40 to 130°C, more preferably 100 to 130°C). The fluorine content in the fluororesins is 50 to 76% by weight, preferably 65 to 76% by weight, and more preferably 70 to 76% by weight. The fluororesins are used in a powder form (particulate form) and the mean particle size of the fluororesins is, for example, 0.05 to 1,000 µm, preferably 0.08 to 20 µm. The density of the fluororesins is 1.2 to 2.3 g/$cm^3$.

The fluororesins are effective in further increasing the drip resistance. As examples of the fluororesins, there may be mentioned homopolymers and copolymers of fluorine-containing vinyl monomers, copolymers of a fluorine-containing vinyl monomer and a fluorine-free vinyl monomer (e.g. ethylene, propylene), for example polymonofluoroethylene, polydifluoroethylene, polytrifluoroethylene, polytetrafluoroethylene, polyvinylidene fluoride, tetrafluoroethylene-hexafluoropropylene copolymer, ethylene-tetrafluoroethylene copolymer and the like. The preferred fluororesins include polytetrafluoroethylene. These fluororesins may be added singly or in combination of two or more.

[Talc (8)]

The resin composition of the present invention contains talc (8). Talc is hydrous magnesium silicate and commercial products can be used. In certain cases, talc may contain trace amounts of aluminum oxide, calcium oxide and iron oxide besides the main components, silicic acid and magnesium oxide. Even when it contains such trace components, no particular problem will arise. The mean particle size of talc can be selected within the range of 0.1 to 50 µm.

[Other components]

The resin composition of the present invention may contain, when necessary, one or more flowability improving agents, for example copolymers of an aromatic vinyl monomer (e.g. styrene) and a (meth)acrylate monomer (e.g. a $C_{1-8}$ alkyl (meth)-acrylate such as methyl (meth)acrylate or butyl (meth)acrylate), aliphatic hydrocarbons (liquid paraffin, paraffin, microcrystalline wax, polyolefin wax, partial oxidation products derived from these and like waxes), higher fatty acids (saturated fatty acids such as caproic acid, palmitic acid and stearic acid, and unsaturated fatty acids such as recinolic acid), higher fatty acid esters (stearic acid triglyceride etc.), higher fatty acid amides (stearamide, oleamide (oleic acid amide), ethylenebisstearamide (ethylenebisstearic acid amide), etc.), higher alcohols (stearyl alcohol etc.), metal soaps, etc.

Furthermore, the resin composition of the present invention may contain various additives, for example stabilizers (antioxidants, ultraviolet absorbers, light stabilizers, heat stabilizers, etc.), reinforcing agents, antistatic agents, lubricants, mold release agents (mold lubricants), fillers, color tone improving agents, colorants, plasticizers,

[Proportions of components]

The proportions of the respective components in the thermoplastic resin composition of the present invention are preferably as follows.

In the resin composition comprising the polycarbonate resin (1) and styrenic resin (2) (hereinafter the composition may be referred to as "PC-PS resin composition"), the proportions of the polycarbonate resin (1) and styrenic resin (2) are former/latter = 50/50 to 95/5 (% by weight), preferably 60/40 to 90/10 (% by weight), more preferably 70/30 to 80/20 (% by weight). When the proportion of the polycarbonate resin is below 50% by weight, the heat distortion temperature will be low. When it exceeds 95% by weight, the moldability tends to decrease. When the proportion of the styrenic resin is higher than 50% by weight, the styrenic resin fail to form a satisfactory dispersed phase, resulting in insufficient capsulation with the compatibilizing agent, hence in a decrease in impact strength.

The level of addition of the compatibilizing agent (3) is preferably 0.1 to 20 parts by weight, more preferably

1 to 10 parts by weight, and even more preferably 1 to 5 parts by weight relative to 100 parts by weight of the PC-PS resin composition. When the amount of the compatibilizing agent (3) is below 0.1 part by weight, it fails to improve the compatibility between the polycarbonate resin and styrenic resin to a sufficient extent and the impact strength of the thermoplastic resin composition may decrease in certain instances. On the other hand, when the addition level exceeds 20 parts by weight, it may adversely affect the flame retardancy and/or reduce the mechanical characteristics in certain instances.

The polyalkylene arylate resin (4) is preferably used in an amount of 0.1 to 20 parts by weight, more preferably 0.5 to 10 parts by weight, and even more preferably 0.5 to 5 parts by weight relative to 100 parts by weight of the PC-PS resin composition. Although the use of the polyalkylene arylate resin is not always necessary, the addition of the polyalkylene arylate resin is conducive to further improvement in the compatibility between the polycarbonate resin and styrenic resin, hence improvement in surface impact strength. When the polyalkylene arylate resin is added in an amount exceeding 20 parts by weight, the flame retardancy is adversely affected and the Izod impact strength tends to decrease.

The level of addition of the polyphenylene ether resin (5) is preferaly 0.1 to 20 parts by weight, more preferably about 0.5 to 10 parts by weight, and even more preferably 0.5 to 5 parts by weight relative to 100 parts by weight of the PC-PS resin composition. Although the addition of the polyphenylene ether resin is not essential, the addition thereof can further improve the compatibility between the polycarbonate resin and styrenic resin and improve the surface impact strength and, furthermore, improve the flame retardancy. When the polyphenylene ether resin is used in an amount exceeding 20 parts by weight, the Izod impact strength tends to decrease.

The content of the flame retardant (6) can be selected, according to the flame retardant species, for example within the range of 1 to 40 parts by weight, preferably 5 to 30 parts by weight, in particular 8 to 20 parts by weight relative to 100 parts by weight of the PC-PS resin composition. When the addition level of the flame retardant is lower than 1 part by weight, the flame retardant effect is insufficient. When it exceeds. 40 parts by weight, the mechanical characteristics of the flame-retarded. thermoplastic resin composition tend to decrease.

The organophosphorus compounds (in particular phosphate esters and condensates thereof), which are preferred flame retardants, are used in an amount of 1 to 40 parts by weight, preferably 3 to 30 parts by weight, and more preferably 5 to 20 parts by weight (in particular 10 to 20 parts by weight) relative to 100 parts by weight of the PC-PS resin composition.

The amount of the flame retardant auxiliary (7) can be selected within the range not larger than 30 parts by weight (0.01 to 30 parts by weight), and preferably 0.01 to 10 parts by weight relative to 100 parts by weight of the PC-PS resin composition.

The fluororesins, which are preferred as the flame retardant auxiliary, are used in an amount of 0.05 to 5 parts by weight, and preferably 0.1 to 1 part by weight relative to 100 parts by weight of the PC-PS resin composition. When the fluororesins are used within the above range, the combined use thereof with the flame retardants (in particular organophosphorus compounds) results in sufficiently preventing dripping which is otherwise caused by plasticization of the resins, without impairing the mechanical characteristics of the flame retarded resin compositions. Therefore, it is advantageous to use the fluororesins, which are preferred flame retardant auxiliaries, as auxiliary flame retardants in combination with the organophosphorus compounds mentioned above.

Moreover, a practically useful degree of fire retardancy can be obtained even without addition of a fluororesin or other auxiliary flame retardant and this fire-retardant thermoplastic resin composition has excellent flowability and impact resistance.

The level of talc is 5 to 30 parts by weight, preferably 7 to 25 parts by weight, and more preferably 10 to 20 parts by weight relative to 100 parts by weight of the PC-PS resin composition. When the amount of talc is smaller than 5 parts by weight, the rigidity improving effect is insufficient. When it exceeds 30 parts by weight, the Izod impact strength tends to decrease.

The amount of the flowability improving agents can be selected within the range of 0 to 10 parts by weight (e.g. 0.1 to 10 parts by weight), preferably 0.1 to 5 parts by weight, and more preferably 0.1 to 2 parts by weight relative to 100 parts by weight of the PC-PS resin composition.

The thermoplastic resin composition of the present invention can be prepared by blending up the respective components using a conventional means. For example, the resin composition of the present invention can be produced by preliminarily mixing, when necessary, the respective components in specified amounts in a mixer such as a Henschel mixer, tumbler blender, or kneader, then melt kneading using an extruder or kneading machine such as heated rolls or a Banbury mixer, and pelletizing or grinding treatment.

In accordance with the present invention, the polymer blends of a polycarbonate resin and a styrenic resin, namely a rubber-modified polystyrenic resin, which have so far been difficult to modify, can be effectively modified. In particular, the thermoplastic resin composition of the present invention is excellent in moldability, impact resistance, thermal stability and flame retardancy. Therefore, the resin composition of the present invention is useful in molding OA equipment, communication equipment, housings for household electric appliances, chassis, other shaped parts,

shaped parts for automobiles and the like. The resin composition of the present invention can be molded by various techniques such as injection molding, extrusion molding and blow molding. Practically, molded articles may be obtained by injection molding.

In accordance with the present invention, the compatibility can be markedly improved by the addition of a compatibilizing agent even in polymer blends comprising a polycarbonate resin and a styrenic resin as main resin components, and thermoplastic resin compositions can be obtained which are comparable in flow characteristics, moldability and impact strength to polymer blends comprising a polycarbonate resin and an ABS resin. Furthermore, the polymer blends are effectively modified and, further, provided with high flame retardancy by adding the flame retardant and optionally a flame retardant auxiliary. In particular, by selecting the flame retardant and flame retardant auxiliary, flame-retarded thermoplastic resin compositions which are not only excellent in flame retardancy, impact resistance and moldability but also highly safe and noncorrosive and halogen-free can be obtained.

REFERENCE EXAMPLES AND COMPARATIVE EXAMPLES

The following examples illustrate the present invention concretely. The are provided as examples showing representative techniques for preparing compositions in accordance with the present invention.

The evaluation methods used in the following examples and comparative examples are as follows.

(1) Impact strength (in kg·cm/cm)

The impact strength was evaluated using test specimens having a thickness of 1/4 inch with the notched Izod impact strength as a measure.

(2) Surface impact strength (drop-weight impact strength, in kgf·cm)

The drop-weight impact strength was evaluated using flat plates having a thickness of 2 mm together with a falling weight weighing 4 kg and having a punch diameter = 20R.

(3) Flame retardancy (UL 94)

Using the vertical flame test (94 V-0) specified in the U. S. UL specification UL 94 as a measure for flame retardancy evaluation, test specimens (bar samples) having a thickness of 1/16 inch were evaluated.

(4) Flowability (in mm)

The distance of flow in a spiral flow cavity (section: 2 mm thick, 20 mm wide) was measured at a cylinder temperature of 250°C, a mold temperature of 60°C and an injection pressure of 500 $kg/cm^2$.

[Preparation of a rubber-modified polystyrene resin (2)]

Synthesis Example 1

Ethylbenzene (10 weight parts) and 0.015 weight part of di-tert-butyl peroxide (DTBPO) were added to and dissolved in a mixture (100 weight parts) composed of 90 weight parts of monomeric styrene and 10 weight parts of a polybutadiene rubber (product of Nippon Zeon Co., Ltd.; BR1220SG). The thus-obtained raw material solution was continuously fed to a complete stirring mixer type preheater and preheated to 100°C, and then continuously fed to a first reactor, which was a column type plug flow reactor equipped with a stirrer, for polymerization. The polymerization temperature within the first reactor was adjusted so that the temperature increased in the direction of flow within the range of 100 to 115°C to provide a temperature gradient.

Then, the above polymerization mixture was continuously fed to a second reactor, which was a static mixer type plug flow reactor, for continuing the polymerization until the polymerization conversion of styrene reached 79%. By heat-treating this polymerization mixture in a twin-screw extruder at 230°C, the volatile matters were removed under reduced pressure, and the residue was pelletized. Analysis of the thus-obtained rubber-modified polystyrene resin revealed a rubber content of 8.8% by weight, a volume average rubber particle size of 2.1 µm, and a weight average molecular weight Mw of 220,000.

The rubber-modified polystyrene resin obtained in Synthesis Example 1 is hereinafter referred to as HIPS-1.

Synthesis Example 2

A rubber-modified polystyrene resin was obtained by following the procedure of Synthesis Example 1 except that the amounts of monomeric styrene and the polybutadiene rubber (product of Nippon Zeon Co., Ltd.; BR1220SG) were modified. Namely 85 weight parts of monomeric styrene and 15 weight parts of the polybutadiene rubber were charged. Analysis of the rubber-modified polystyrene resin obtained gave a rubber content of 11.5% by weight, a volume average rubber particle size of 1.8 µm, and a weight average molecular weight Mw of 215,000.

The rubber-modified polystyrene resin obtained in Synthesis Example 2 is hereinafter referred to as HIPS-2.

[Preparation of an epoxy-modified block copolymer as a compatibilizing agent]

Synthesis Example 3

A jacketed reactor equipped with a stirrer, reflux condenser and thermometer was charged with 300 g of a styrene-butadiene-styrene-butadiene block copolymer [product of Asahi Chemical Industry Co., Ltd.; Asaflex 810; styrene/butadiene = 70/30 (weight ratio)] and 900 g of ethyl acetate to give a block copolymer solution. Then, to this block copolymer solution was continuously added dropwise 130 g of a 30% (by weight) peracetic acid solution in ethyl acetate, and the epoxidization reaction was thereby carried out at 40°C for 3 hours with stirring. The reaction mixture was turned to room temperature, washed with water, taken out from the reactor and removed the solvent by distillation under reduced pressure. The epoxy-modified block copolymer obtained had an epoxy equivalent of 767.

In the reference examples and comparative examples, the following materials were used.

Polycarbonate resin (1):

Bisphenol A-based polycarbonate resin [product of Teijin Chemicals Ltd.; Panlite L-1225WP]

Rubber-modified polystyrene resin (2) :

HIPS-1 or HIPS-2 obtained in the above-mentioned synthesis examples 1 or 2

Compatibilizing agent (3):

Epoxy-modified block copolymer obtained in the above-mentioned synthesis example 3

Polyalkylene arylate resin (4):

Poly(1,4-cyclohexanedimethylene terephthalate) containing ethylene glycol as a comonomer component [PCTG; product of Eastman Chemical Company; Easter DN003]

Polyphenylene ether resin (5):

Poly(2,6-diethyl-1,4-phenylene) ether [product of GE Specialty Chemicals, Inc.; BLENDEX HPP820]

Flame retardant (6) (organophosphorus compound):

(1) Triphenyl phosphate
(2) A condensed phosphate ester of the formula (III) [product of Daihachi Chemical Industry Co., Ltd.; PX-200]

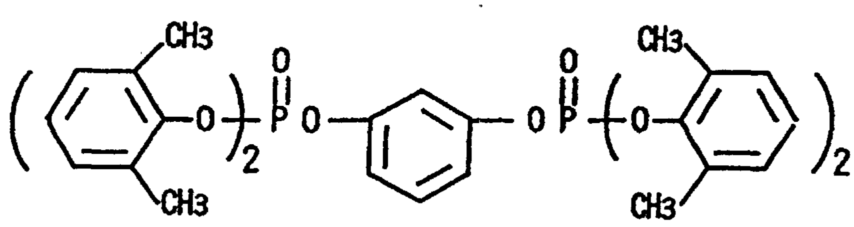

(III)

Flame retardant auxiliary (7) (fluororesin) :

Polytetrafluoroethylene
[product of Mitsui-Du Pont Fluorochemicals Co., Ltd.; Teflon 6-J]

Block copolymer:

(1) Styrene-butadiene-styrene block copolymer [product of Japan Synthetic Rubber Co., Ltd.; TR2000; styrene/butadiene = 40/60 (weight ratio)]

(2) Styrene-butadiene-styrene-butadiene block copolymer [product of Asahi Chemical Industry Co., Ltd.; Asaflex 810; styrene/butadiene = 70/30 (weight ratio)]

ABS resin:

[product of Daicel Chemical Industries, Ltd.; Cevian V520]

Reference Examples 1 to 14 and Comparative Examples 1 to 7

The materials mentioned above were blended in a tumbler blender according to the formulation and proportions (parts by weight) shown in Table 1 and Table 2, and the mixtures were melt-kneaded in an extruder to give resin compositions in the form of pellets. Then, each resin composition in pellet form was molded into test specimens using an injection molding machine (cylinder temperature 240°C, mold temperature 60°C), which were subjected to physical properties testing. The results thus obtained are shown in Table 1 and Table 2.

**Table 1**

| | Reference Example | | | | | | Comparative Example | | | |
|---|---|---|---|---|---|---|---|---|---|---|
| | 1 | 2 | 3 | 4 | 5 | 6 | 1 | 2 | 3 | 4 |
| Panlite L-1225WP | 80 | 80 | 80 | 80 | 80 | 70 | 80 | 80 | 80 | 80 |
| HIPS-1 | 20 | | | | | | | | | |
| HIPS-2 | | 20 | 20 | 20 | 20 | 20 | 20 | 20 | 20 | |
| Epoxy-modified block copolymer | 3 | 3 | 3 | 3 | 3 | 3 | | | | |
| TR2000 | | | | | | | | 3 | | |
| Asaflex 810 | | | | | | | | | 3 | |
| Easter DN003 | | | 1 | | 1 | | | | | |
| BLENDEX HPP820 | | | | 1 | 1 | | | | | |
| Cevian V520 | | | | | | | | | | 20 |
| Izod impact Strength (kgf·cm/cm) | 55 | 72 | 67 | 60 | 58 | 68 | 7 | 15 | 10 | 45 |
| Drop-weight impact strength (2 mm thick) (kgf·cm) | 150 | 190 | 210 | 380 | 400 | 110 | 30 | 50 | 50 | 450 |
| Flow (mm) | 118 | 115 | 116 | 114 | 113 | 130 | 124 | 120 | 121 | 99 |

Table 2

| | Reference Example | | | | | | | | Comparative Example | | |
|---|---|---|---|---|---|---|---|---|---|---|---|
| | 7 | 8 | 9 | 10 | 11 | 12 | 13 | 14 | 5 | 6 | 7 |
| Panlite L-1225WP | 80 | 80 | 80 | 80 | 80 | 80 | 80 | 70 | 80 | 80 | 80 |
| HIPS-1 | | 20 | | | | | | | | | |
| HIPS-2 | 20 | | 20 | 20 | 20 | 20 | 20 | 30 | 20 | 20 | |
| Epoxy-modified block copolymer | 3 | 3 | 3 | 3 | 3 | 3 | 3 | 3 | | | |
| Asaflex 810 | | | | | | | | | | | |
| Easter DN003 | | | | | 1 | | 1 | | | 3 | |
| BLENDEX HPP820 | | | | | | 1 | 1 | | | | |
| Triphenyl phosphate | 12 | 12 | 12 | | 12 | 10 | 10 | 14 | 12 | 12 | 12 |
| PX-200 | | | | 15 | | | | | | | |
| Teflon 6-J | | 0.5 | 0.5 | 0.5 | 0.5 | 0.5 | 0.5 | 0.5 | 0.5 | 0.5 | 0.5 |
| Cevian V520 | | | | | | | | | | | 20 |
| Izod impact Strength (kgf·cm/cm) | 50 | 41 | 52 | 30 | 50 | 37 | 35 | 28 | 4 | 7 | 40 |
| Drop-weight impact strength (2 mm thick) (kgf·cm) | 140 | 115 | 135 | 120 | 170 | 340 | 350 | 100 | 20 | 40 | 330 |
| Flow (mm) | 225 | 230 | 222 | 226 | 223 | 215 | 216 | 239 | 229 | 226 | 198 |
| Flame retardancy (UL94) | V-2 | V-0 | V-0 | V-0 | V-0 | V-0 | V-0 | V-0 | V-0 | V-0 | V-0 |

As is evident from Table 1 and Table 2 given above, the thermoplastic resin compositions of the reference examples which were mainly composed of the polycarbonate resin and rubber-modified polystyrene resin showed

almost the same impact strength and higher flowability (better moldability) as compared with the ABS resin-polycarbonate resin polymer blends.

As regards the flame retardant- and flame retardant auxiliary-containing flame-retarded thermoplastic resin compositions, the thermoplastic resin compositions of the reference examples were comparable in impact resistance and more excellent in flame retardancy and flowability (moldability) as compared with the polycarbonate resin- and ABS resin-based resin compositions.

## Claims

1. A thermoplastic resin composition comprising a polycarbonate resin (1), a styrenic resin (2), a compatibilizing agent (3), a flame retardant (6) and talc (8), wherein said styrenic resin (2) comprises a rubber modified polystyrene resin, wherein the compatibilizing agent (3) comprises an epoxy-modified block copolymer (E) derived from a block copolymer (C) and/or a partial hydrogenation product (D) thereof, the block copolymer (C) comprising a polymer block (A) mainly composed of an aromatic vinyl compound and a polymer block (B) mainly composed of a conjugated diene compound, and the epoxy-modified block copolymer (E) being obtained by epoxidization of the double bond originating from the conjugated diene compound, said flame retardant (6) comprises a phosphorus-containing flame retardant, the amount of talc (8) is in a range of from 5 to 30 parts by weight to 100 parts by weight of the resin composition composed of polycarbonate resin (1) and rubber-modified polystyrene resin (2), wherein domains of the styrenic resin (2) as the dispersed phase are surrounded or enclosed by the compatibilizing agent (3).

2. The thermoplastic resin composition as claimed in claim 1, wherein the amount of the compatibilizing agent (3) is in a range of 0.1 to 20 parts by weight per 100 parts by weight of the resin composition composed of polycarbonate resin (1) and styrenic resin (2).

3. The thermoplastic resin composition as claimed in claim 1, wherein the primary resin composition is composed of 50 to 95% by weight of the polycarbonate resin (1) and 5 to 50% by weight of the styrenic resin (2).

4. The thermoplastic resin composition as claimed in claim 1, wherein the block copolymer (C) is terminating in a B block.

5. A thermoplastic resin composition as claimed in claim 1, wherein the block copolymer (C) is at least one selected from an A-B block copolymer and an A-B-A-B block copolymer.

6. The thermoplastic resin composition as claimed in claim 1 which further comprises 0.1 to 20 parts by weight, per 100 parts by weight of the primary resin composition, of a polyalkylene arylate resin (4).

7. The thermoplastic resin composition as claimed in claim 1 which further comprises 0.1 to 20 parts by weight, per 100 parts by weight of the primary resin composition, of a polyphenylene ether resin (5).

8. The thermoplastic resin composition as claimed in claim 1 which further comprises 1 to 40 parts by weight, per 100 parts by weight of the primary resin composition, of the flame retardant (6).

9. The thermoplastic resin composition as claimed in claim 8 which further comprises 0.01 to 30 parts by weight, per 100 parts by weight of the primary resin composition, of a flame retardant auxiliary (7).

10. The thermoplastic resin composition as claimed in claim 9, wherein the flame retardant auxiliary (7) is a fluororesin, the content of said fluororesin being 0.05 to 5 parts by weight, per 100 parts by weight of the primary resin composition.

## Patentansprüche

1. Thermoplastische Harzzusammensetzung, umfassend ein Polycarbonatharz (1), ein Styrolharz (2), ein Verträglichkeitsmittel (3), einen Flammverzögerer (6) und Talk (8), wobei besagtes Styrolharz (2) ein Kautschuk-modifiziertes Polystyrolharz umfasst, wobei das Verträglichkeitsmittel (3) ein Epoxy-modifiziertes Blockcopolymer (E) umfasst, abgeleitet von einem Blockcopolymer (C) und/oder einem teilweisen Hydrierungsprodukt (D) davon, wobei das Blockcopolymer (C) einen polymeren Block (A), hauptsächlich zusammengesetzt aus einer aromatischen

Vinylverbindung, und einem Polymerblock (B), hauptsächlich zusammengesetzt aus einer konjugierten Dienverbindung, umfasst und das Epoxy-modifizierte Blockcopolymer (E) erhalten wird durch Epoxydieren der Doppelbindungen, ursprünglich herstammend aus der konjugierten Dienverbindung, wobei besagter Flammverzögerer (6) einen Phosphor enthaltenden Flammverzögerer enthält, wobei die Menge an Talk (8) im Bereich von 5 bis 30 Gewichtsteile liegt, relativ zu 100 Gewichtsteilen der Harzzusammensetzung zusammengesetzt aus Polycarbonatharz (1) und Kautschuk-modifiziertem Styrolharz (2), wobei Domänen des Styrolharzes (2) als disperse Phase umgeben oder eingeschlossen sind durch das Verträglichkeitsmittel (3).

**2.** Thermoplastische Harzzusammensetzung nach Anspruch 1, wobei die Menge an Verträglichkeitsmittel (3) im Bereich von 0,1 bis 20 Gewichtsteile liegt, pro 100 Gewichtsteilen der Harzzusammensetzung zusammengesetzt aus Polycarbonatharz (1) und Styrolharz (2).

**3.** Thermoplastische Harzzusammensetzung nach Anspruch 1, wobei die primäre Harzzusammensetzung aus 5 bis 95 Gew.-% des Polycarbonatharzes (1) und 5 bis 95 Gew.-% des Styrolharzes (2) zusammengesetzt ist.

**4.** Thermoplastische Harzzusammensetzung nach Anspruch 1, wobei das Blockcopolymer (C) einen terminalen Block B aufweist.

**5.** Thermoplastische Harzzusammensetzung nach Anspruch 1, wobei das Blockcopolymer (C) mindestens eins ist, ausgewählt unter einem A-B-Blockcopolymer und einem A-B-A-B-Blockcopolymer.

**6.** Thermoplastische Harzzusammensetzung nach Anspruch 1, weiter umfassend 0,1 bis 20 Gewichtsteile, pro 100 Gewichtsteilen der primären Harzzusammensetzung, eines Polyalkylenarylatharzes (4).

**7.** Thermoplastische Harzzusammensetzung nach Anspruch 1, weiter umfassend 0,1 bis 20 Gewichtsteile, pro 100 Gewichtsteilen der primären Harzzusammensetzung, eines Polyphenylenetherharzes (5).

**8.** Thermoplastische Harzzusammensetzung nach Anspruch 1, weiter umfassend 1 bis 40 Gewichtsteile, pro 100 Gewichtsteilen der primären Harzzusammensetzung, des Flammverzögerers (6).

**9.** Thermoplastische Harzzusammensetzung nach Anspruch 8, weiter umfassend 0,01 bis 30 Gewichtsteile, pro 100 Gewichtsteilen der primären Harzzusammensetzung, eines Flammverzögerungshilfsmittels (7).

**10.** Thermoplastische Harzzusammensetzung nach Anspruch 9, wobei das Flammverzögerungshilfsmittel (7) ein Fluoroharz ist, wobei der Gehalt an Fluoroharz von 0,05 bis 5 Gewichtsteile beträgt, pro 100 Gewichtsteilen der primären Harzzusammensetzung.

## Revendications

**1.** Composition à base de résine thermoplastique comprenant une résine polycarbonate (1), une résine styrénique (2), un agent compatibilisant (3), un agent retardateur de combustion (6) et du talc (8), dans laquelle ladite résine styrénique (2) comprend une résine polystyrène modifiée par un caoutchouc, dans laquelle l'agent compatibilisant (3) comprend un copolymère séquencé époxydé (E) dérivé d'un copolymère séquencé (C) et/ou un produit d'hydrogénation partielle (D) de celui-ci, le copolymère séquencé (C) comprenant un bloc polymère (A) principalement composée d'un composé vinylaromatique et un bloc polymère (B) principalement composé d'un composé diénique conjugué, et le copolymère séquencé époxydé (E) étant obtenu par époxydation de la double liaison provenant du composé diénique conjugué, ledit agent retardateur de combustion (6) comprend un agent retardateur de combustion phosphoré, la quantité de talc (6) est comprise entre 5 et 30 parties en poids pour 100 parties en poids de composition de résine constituée de résine polycarbonate (1) et de résine polystyrène modifiée par un caoutchouc (2), dans laquelle des domaines de résine styrénique (2) à titre de phase dispersée sont entourés ou inclus par l'agent comptabilisant (3).

**2.** Composition de résine thermoplastique selon la revendication 1, dans laquelle la quantité d'agent compatibilisant (3) est comprise entre 0,1 et 20 parties en poids pour 100 parties en poids de composition de résine constituée de résine polycarbonate (1) et de résine styrénique (2).

**3.** Composition de résine thermoplastique selon la revendication 1, dans laquelle la composition de résine primaire

est composée à raison de 50 à 95% en poids de résine polycarbonate (1) et de 5 à 50% en poids de résine styrénique (2).

**4.** Composition de résine thermoplastique selon la revendication 1, dans laquelle le copolymère séquencé (C) se termine par un bloc B.

**5.** Composition à base de résine thermoplastique selon la revendication 1, dans laquelle le copolymère séquencé (C) en est au moins un copolymère choisi parmi un copolymère séquencé A-B et un copolymère séquencé A-B-A-B.

**6.** Composition à base de résine thermoplastique selon la revendication 1, qui comprend en outre de 0,1 à 20 parties en poids, pour 100 parties en poids de composition de résine primaire, d'une résine arylate de polyalkylène (4).

**7.** Composition à base de résine thermoplastique selon la revendication 1 qui comprend en outre de 0,1 à 20 parties en poids, pour 100 parties en poids de composition de résine primaire, de résine oxyde polyphénylène (5).

**8.** Composition à base de résine thermoplastique selon la revendication 1 qui comprend en outre de 1 à 40 parties en poids, pour 100 parties en poids de composition de résine primaire, d'agent retardateur de combustion (6).

**9.** Composition à base de résine thermoplastique selon la revendication 8, qui comprend en outre de 0,01 à 30 parties en poids, pour 100 parties en poids de composition de résine primaire, d'un agent auxiliaire retardateur de combustion (7).

**10.** Composition à base de résine thermoplastique selon la revendication 9, dans laquelle l'agent auxiliaire retardateur de combustion (7) est une résine fluorée, la teneur en ladite résine fluorée étant de 0,05 à 5 parties en poids, pour 100 parties en poids de composition de résine primaire.

Fig. 1

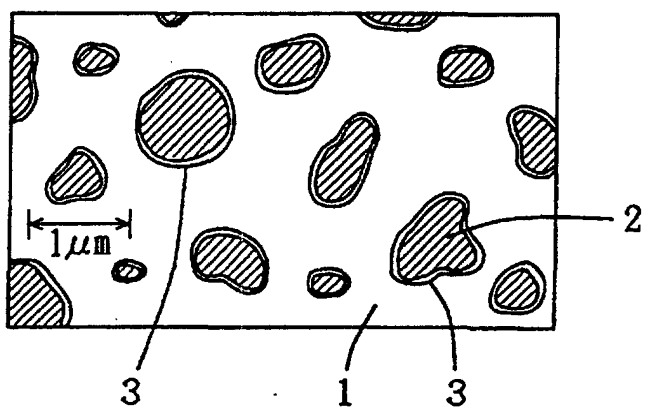


Fig. 2